Europäisches Patentamt

European Patent Office

Office européen des brevets

(11) Publication number: **0 218 481 B1**

## EUROPEAN PATENT SPECIFICATION

(45) Date of publication of patent specification: **02.01.92**

(51) Int. Cl.⁵: **C02F 1/00**, C02F 1/68, C02F 1/76

(21) Application number: **86307668.3**

(22) Date of filing: **03.10.86**

(54) Inline dispersal valve.

(30) Priority: **03.10.85 US 783615**

(43) Date of publication of application:
**15.04.87 Bulletin 87/16**

(45) Publication of the grant of the patent:
**02.01.92 Bulletin 92/01**

(84) Designated Contracting States:
**DE ES FR GB**

(56) References cited:
**US-A- 2 663 314**
**US-A- 3 901 262**
**US-A- 3 929 151**
**US-A- 4 250 911**

(73) Proprietor: **King, Lloyd H., Sr.**
**5222 Green Farms Road**
**Edina Minnesota 55436(US)**

(72) Inventor: **King, Lloyd H., Sr.**
**5222 Green Farms Road**
**Edina Minnesota 55436(US)**

(74) Representative: **Silverman, Warren et al**
**HASELTINE LAKE & CO. Hazlitt House 28**
**Southampton Buildings Chancery Lane**
**London WC2A 1AT(GB)**

Rank Xerox (UK) Business Services

## Description

The present invention relates to dispersal valves for dispersing materials such as bromine and chlorine from solid tablets for use in swimming pools, hot tubs, spas and the like.

Inline dispersal valves for controllably dispersing material into a fluid stream are shown in U.S. Patent Nos. 4,270,565 and 4,331,174 both of which issued in the name of Lloyd H. King, Sr., the inventor of the present invention. In these prior inline dispersal valves, the control was obtained by lowering and raising a container which had a plurality of apertures in it so that more or fewer apertures would be presented to the fluid stream flowing through the pipeline to which the valve is attached. While effective, the adjustment mechanism and the construction of the valve are not as simple or controllable as is the valve of the present invention and therefore, for certain applications, the valve of the present invention is to be preferred.

In the Sebald, et al. U.S. Patent 2,481,882 a flow deflecting structure is presented to the fluid stream pipeline which deflects this stream toward a sight glass where the fluid stream then flows through the sight glass, reverses direction and passes out through a deflecting portion that faces in the direction opposite to the fluid flow of the main stream. A plug valve which is rotatable to close off the path into and out of the sight glass is coupled between the sight glass and the main fluid stream.

Finally, U.S. Patent No. 3,919,151 to Rubin discloses an apparatus for dispensing materials such as chlorine to swimming pools which has parallel flow paths between a single inlet and a single outlet for adding such material to one flow path. A relatively complicated valve means is provided to selectively control the rate of flow through the one path which rate is varied in response to line pressure in the other path.

It is an object of the present invention to provide a dispersal valve arrangement which is particularly suited to use with solid dispersing materials and which is of relatively simple construction.

According to one aspect of the present invention, there is provided an inline dispersal valve for metering the amount of material that is dispersed into a fluid stream comprising:

a chamber for holding material to be dispersed into a fluid stream;

a closure on said chamber to permit addition of a material to be dispersed to said chamber;

first means acting as a fluid deflector located in the fluid stream and serving as means for directing fluid away from said fluid stream into said chamber to permit the directed fluid to dissolve said material in said chamber into said fluid stream;

second means for directing the directed fluid containing the said material back into the fluid stream and comprising a fluid outlet tube located in said fluid stream in a direction opposite to the fluid direction; and

control means for controllably restricting the amount of fluid flowing through said first and second means, characterised in that the control means includes a rotatable plug, with said first means for directing fluid away from said stream comprising an opening in said rotatable plug and said second means comprising a second opening in said rotatable plug, said rotatable plug being located at least partially in said fluid stream and including a plurality of first openings to vary the flow of fluid into the chamber of said inline dispersal valve and a plurality of second openings to vary the flow of fluid through said second opening through rotation of said rotatable plug.

This invention also provides in a second aspect an inline dispersal valve comprising an input pipe coupled to receive a main fluid stream, an output pipe coupled to emit said main fluid stream, a chamber for containing solid dispersant material therein located intermediate said input and output pipes and having a top and having a bottom comprising an inlet port aperture that has an axis positioned substantially normal to the flow direction of said main fluid stream and is formed through said bottom of said chamber at a position closer to said input pipe than said output pipe, an outlet port aperture that has an axis positioned substantially normal to the flow direction of said main fluid stream and is formed through said bottom of said chamber at a position closer to said output pipe than said input pipe, first fluid directing means having an inlet inserted into said main fluid stream below said chamber which is constructed to direct a portion of said main fluid stream away from said main fluid stream and into a secondary stream that flows towards said outlet port aperture, second fluid directing means having an outlet inserted into said main fluid stream below said chamber which is constructed to direct said secondary stream from said chamber so said secondary stream merges back with said main stream with said secondary stream flowing in substantially the same direction as said main stream, characterised by the presence of control means which includes a rotatable plug comprising first and second regulating means wherein said first regulating means is located between said input port aperture and said first directing means and said second regulating means is located between said output port aperture and said second directing means, whereby rotation of said plug controllably restricts the areas of said input port and output port apertures that are available for said secondary stream.

The present invention employs a fluid deflector which is inserted into the main fluid stream to deflect the fluid into the chamber. However, the chamber in the present invention contains a solid dispersant material and the diverted stream flows over the solid material to dissolve some of it into the stream, and then merges back in with the main stream. A second fluid deflector faces in the direction opposite the flow of the stream.

With the arrangement to the invention, there is also a control regulator which is designed so that a precise control of the amount of fluid flowing over the solid dispersant material is obtained. The construction of this control regulator of the present invention is designed to provide high efficiency and effectiveness. More particularly, the control plug is directly attached to the aperture such that when the plug is rotated, the amount of fluid exposed to the apertures is increased or decreased directly for the fluid admitted to make contact on solid material from a chemical canister housed within the valve and which may be keyed to the housing of the valve to prevent insertion of improper chemicals into the dispersal valve.

For a better understanding of the invention and to show how the same can be carried into effect reference will now be made by way of example only to the accompanying drawings wherein:

FIGURE 1 is a perspective view with part cut away of an inline dispersal valve device embodying the present invention showing overall fluid flow and general operation.

FIGURE 2 is a longitudinal section through the valve of Figure 1, showing the dispersant chamber and fluid flow pattern;

FIGURE 3 is a perspective view of the plug and hole pattern of a plug with O-ring seal for use in the valve device of Figure 1;

FIGURE 4 is a longitudinal sectional view through the entire valve showing a keyed chemical canister inserted therein, with part of the illustrated arrangement being cut away, the section being taken at right angles to that shown in Figure 2;

FIGURE 5 is a view of the chemical chamber to be inserted into the chamber of the inline dispersal valve device of Figure 1 showing a pressure valve and a keyed top;

FIGURE 6 shows the plug of the dispersal valve arrangement of Figure 1 in a planar projection to illustrate the shape of the openings therein;

FIGURE 7 shows in enlarged scale a pressure relief valve for the base of the valve device embodying this invention;

FIGURE 8 is a longitudinal cross-sectional view that shows an alternative form of closure cap arrangement to that of Figure 4, and

FIGURE 9 is a longitudinal cross-sectional view of a further alternative version of closure cap arrangement.

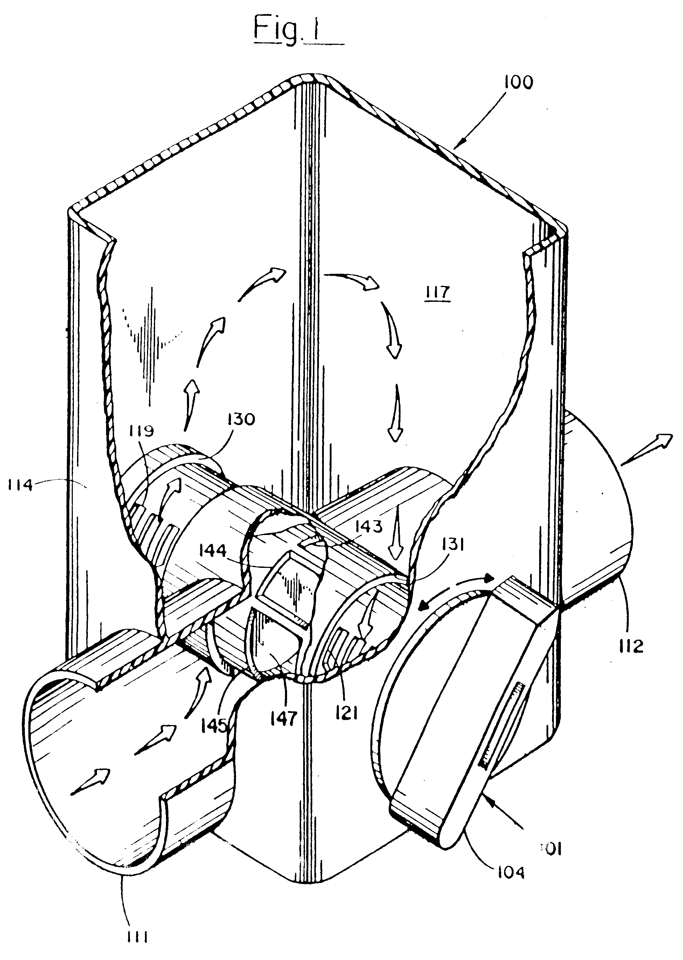

Referring to Figures 1 to 6, there is shown one form of inline dispersal valve device embodying this invention. With this valve, a chemical dispersant may be stored in a keyed canister to prevent inadvertant placing of the wrong chemical dispersant in the dispersal valve device. A further advantage of the use of such canister is that the dispersant chemicals can be inserted without undergoing any bodily contact with the operator.

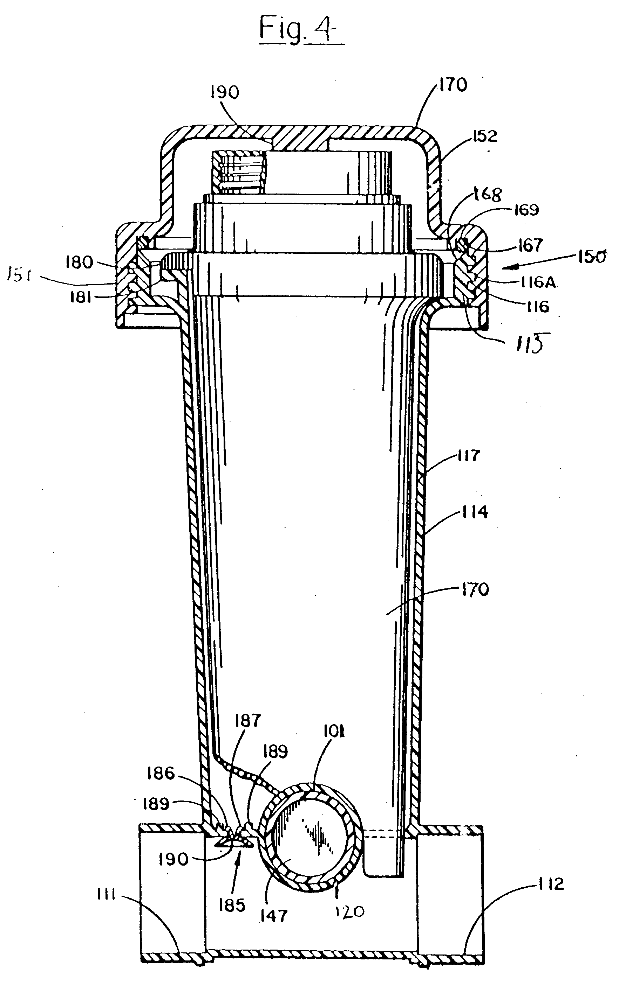

Figure 1 of the drawings shows a dispersal valve device housing 100 and a rotatable plug 101 for control of the functioning of the housing as a valve. The valve device housing 100 contains an input connecting pipe 111, an output connecting pipe 112 and a vertical collar 114, all of which are integrally formed as one part. The input connecting pipe 111 and the output connecting pipe 112 may be connected to system pipes by means of threaded connections, adhesive or any other suitable means. Although one pipe has been designated as an input connecting pipe and the other as an output connecting pipe, the internal symmetry of the valve device of the invention permits its operation in either direction. Vertical collar 114 extends to an annular lip 115 that has external threads 116 which mate with threads 116A on a cap 150 (Figure 4).

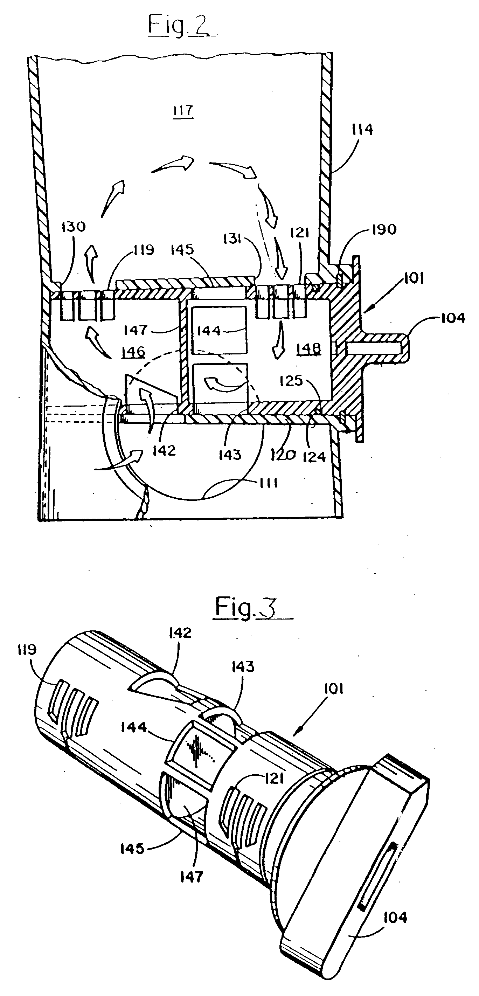

Figure 2 shows an elongated vertically oriented chamber 117 defined by collar 114 and which is to hold the dispersant which typically may be bromine or chlorine tablets of the type conventionally used for swimming pools, spas, hot tubs and the like. If desired, a chemical canister having a keyed section which mates to the inside of the container can be used to hold the chemical dispersant in chamber 117. The purpose of use of an internal canister is to prevent the chemical dispersant in the canister from making bodily contact with the operator. Referring to Figures 1 and 2, the control plug 101 has an elongated handle 104 that extends across the end of plug 101 to permit rotation of the latter.

Typically, plug 101 is made with a tapered external section as illustrated best in Figure 2. The tapered section permits plug 101 to be inserted into a mating tapered housing 120 disposed within the valve device housing 100. The control plug 101 is located partly in line with fluid flow and partly above to permit openings in the control plug 101 to be in line with the fluid flowing through valve discharge housing 100. The flow direction of the fluid through control plug 101 is shown by the arrows in Figures 1 and 2. The amount of fluid that flows through apertures 119 and 121 in the fluid control plug 101 (see Figures 3 and 4) is controlled in accordance with the total area that is available respectively to fluid flow port apertures 130 and 131 in housing 120 leading to chamber 117.

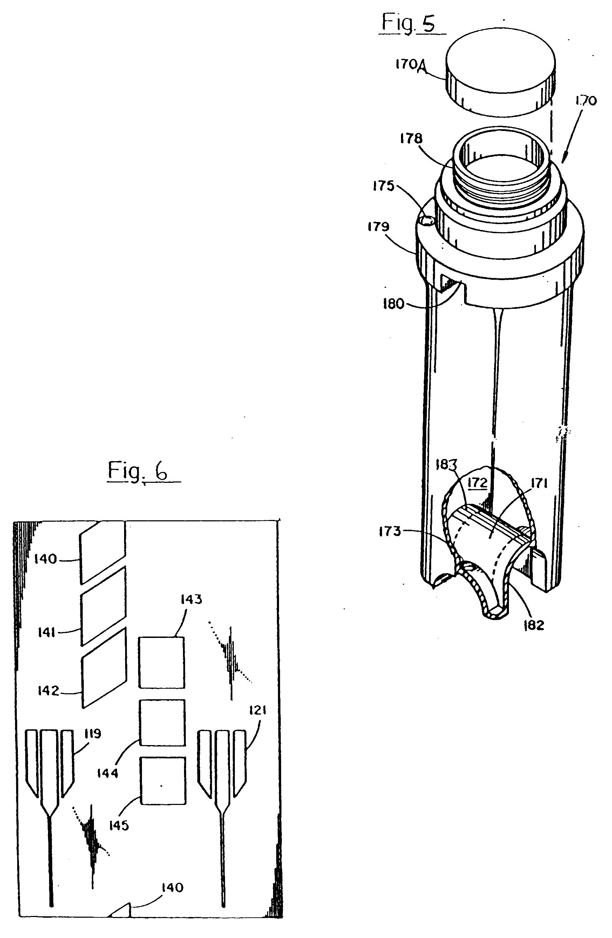

Figure 6 shows, in a rolled out view, the surface of control plug 101, showing therein a particular hole pattern formed prior to assembly. Openings 140, 141 and 142 permit fluid to flow into the left hand chamber 146 (Figure 2) from pipe 112 while openings 143, 144 and 145 permit fluid to flow back into pipe 111. Figure 2 also shows a circular wall 147 extending between the aforesaid left hand chamber 146 and right hand chamber 148 to prevent the axial flow of fluid from one chamber to the other. The adjustment of the position of the control apertures 121 and 119 with respect to port apertures 131 and 130 respectively in the housing 120 will be described subsequently in more detail. Control plug 101 includes an annular O-ring 124 that is located in an annular cavity 125 formed on the plug valve 101 to provide a fluid seal between plug valve 101 and the part of the vertical collar 114 thereadjacent. O-ring 124 comprises a two part member having a rubber inner member and an outer polytetrafluorine covering. Sufficient clearance is allowed so that plug 101 is able to rotate.

As shown in Figures 1 and 2, fluid enters the inline valve device housing 100 through input connecting pipe 111 with the arrows indicating the flow of fluid upwards through opening 142 into chamber 146. Fluid flow then occurs through the control apertures 119 and port aperture 130. The control apertures 119 direct the fluid into chamber 117 where it swirls around a dispersant located therein (not shown). The amount of dispersant which is to be dissolved or mixed is controlled by the open areas into chamber 117 which results from the alignment of control apertures 119 with port apertures 130 and control apertures 121 with port aperture 131. After the fluid flow of the material to be dispersed, the fluid flows through port aperture 131 and control apertures 121 as shown by the arrows into chamber 148. The fluid then flows into an outlet which faces in the direction away from the incoming fluid (downstream). Since the orientation of the opening 140 faces upstream and the outlet opening 143 faces downstream, it produces a flow of fluid from the inlet opening 140 to the outlet opening 143.

To control or adjust the amount of fluid that flows through dispersal valve device housing 100, one rotates plug valve 101 to adjust the position of the control apertures 119 and 121 relative to the port apertures 130 and 131 which are provided in housing 120. A handle 104 is provided to permit rotation of control plug 101. As control plug 101 is rotated in one direction, it increases the area of it open to chamber 117 and when control plug 101 is rotated in the opposite direction, it decreases the amount of area open to chamber 117.

Referring to Figure 4, there is shown the top of the chamber 117 covered by a removable screw cap 150 which prevents gases from escaping from chamber 117. The screw cap 150 has a domed section 152 with an internal projection 190 for holding the top of a canister 170 in place in chamber 117. A downwardly depending sidewall 151 has threads 116A which mate with the set of threads 116 on annular lip 115 of collar 114 to securely hold the domed cap 150 on collar 114. Located in a channel 169 in cap 150 is an O-ring 167 which forms a fluid seal against tapered annular seat 168 to prevent escape of fluids therepast and which makes it easier to keep the seat clean.

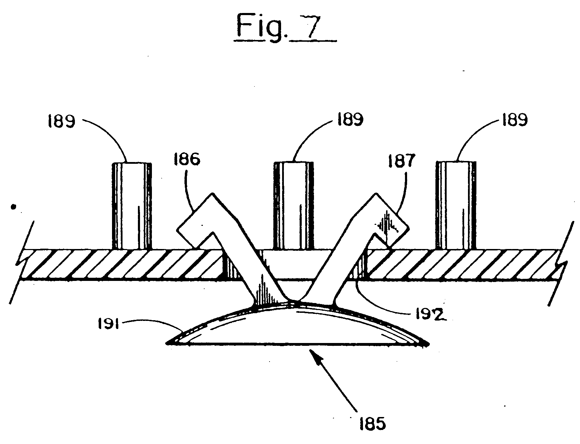

Figures 4 and 7 show a chemical canister 170 for use in the valve device housing of the invention. Figure 5 shows the canister with its top 170A removed this being possible owing to the presence of screw threading 178 on the canister and matching threading on the cap; however, in preferred use of the canister, the top 170A of the canister would be permanently secured to canister 170 to prevent unauthorised access to the contents thereof. In order to prevent accidental insertion of the wrong chemical into the dispersal valve device, the canister has a shaped portion 180 formed in an annular ledge 179. The shaped portion is a slot which fits around a mating keyed male member 181 on collar 114. While the canister 170 permits the operator to instal the chemicals in the valve device 100 without physically touching the chemicals, the keying of the canister to the housing permits only one shape of canister to be inserted into the dispersal valve device as each canister for a specific chemical is keyed differently. Therefore, one can be assured that the hazard of inserting an improper chemical into the valve device will be virtually eliminated. Figure 5 shows the bottom of canister 170 to contain a foil covering 171 which typically is adhesively fastened to semi-circular flanges 182 and 183 to form the base of housing 173 of the canister. The curvature of the flanges matches that of housing 120 against which the canister 170 rests under the action of projection 190 of cap 150 of the housing 100 of the overall valve device. While foil is shown, other means could be used to seal canister 170. Before the canister 170 is inserted into a dispersal valve housing, the foil 171 is removed to permit fluid to enter chamber 172 within the canister.

Located on the bottom of canister 170 is an opening to permit fluid to drain from or enter valve plug 101. Located on top of the canister is rupturable seal 175 that permits air to enter canister 170 when seal 175 is broken. Typically, seal 175 may be a metal foil or the like or a weakened section of canister 170 that one could pierce with a sharp instrument.

Referring to Figure 4 and Figure 7, there is shown a vertically displaceable pressure relief valve 185 in the base wall of chamber 117 and which comprises resilient legs 187 and 186 and a resilient member 191 that coact to hold the relief valve in the up position thereby causing the part spherical upper surface of head member 191 to form a sealing arrangement around opening 192 in the base wall of chamber 117. Figure 7 shows the relief valve in the open position for there to be fluid flow past valve 185. When the fluid ceases to flow through opening 192, the natural resiliency of legs 186 and 187 pulls valve head member 191 up to opening 192. When in the up position, a higher pressure belowing opening 192 will close the valve 185 while a higher pressure above valve 185 will force valve 185 down as shown in Figure 7 to permit thereby escape of fluid. Located around the opening 192 are a series of pegs 189 which prevent the dispersant from forcing valve 185 downwards.

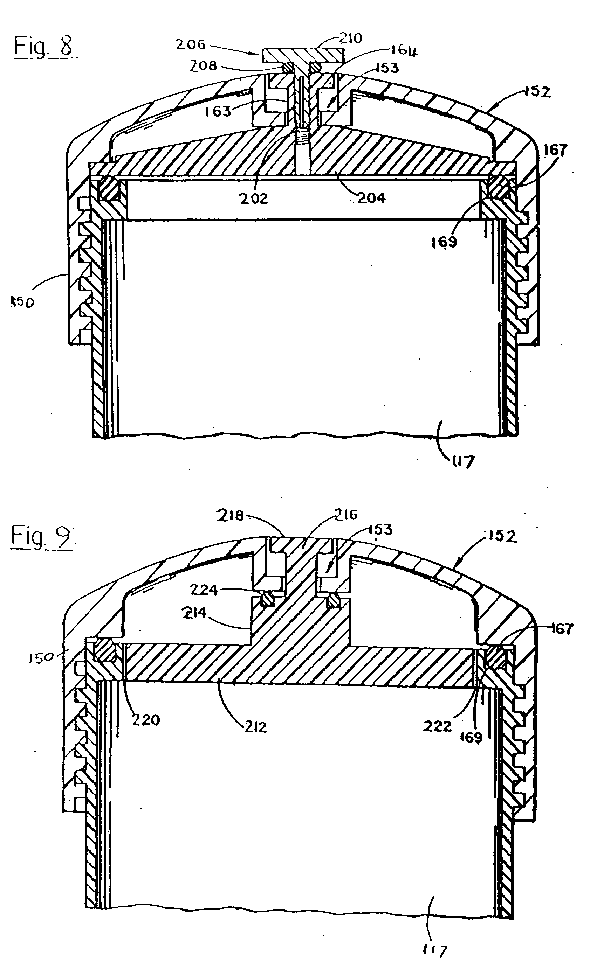

Finally, Figures 8 and 9 shows alternative forms of closure for dispersant material-containing chambers 117 which have special means for closing them off. In Figure 8, an internally threaded boss 163 extends upwardly into a recess 153 formed within the domed section 152 of cap 150. The boss 163 has an upper flanged portion 164 which substantially closes off the recess 153. A valve seat 202 is located in a closure member 204 and a pressure release valve 206 which mates with the valve seat is threaded into the threading of the boss 163 so as to close the valve seat 202 when it is threaded fully into the boss and thus is able to relieve pressure when the valve seat is threaded out of the boss. An O-ring 208 is located below the head 210 of the pressure release valve 206 to seal the space between the flange 200 and the head 210. In this instance, the domed cap 150 is sealed by an O-ring 167 that is inserted into a channel 169 which, in contrast to Figure 9, is here formed in the collar 114. The O-ring 167 is compressed by the closure member 204.

In the arrangement shown in Figure 9, the chamber 117 is shown as having a moulded-on top closure structure 212. At slight variance from what is shown in Figure 8, here the O-ring 167 is compressed by the domed cap 150. The closure structure has an integrally formed raised boss 214 with a smaller diameter support pin 216 that projects upwardly from the boss 214 so that head 218 of the pin substantially occupies the top of the recess 153. Vent holes 220 and 222 are provided in the closure structure 212 so that when the cap 150 is unscrewed, the pressure in the chamber 117 may be released. The domed cap 150 and the boss 214 are sealed by means of a circular O-ring 224 that surrounds the pin 216.

## Claims

1. An inline dispersal valve for metering the amount of material that is dispersed into a fluid stream comprising:

   a chamber (117) for holding material to be dispersed into a fluid stream;

   a closure (150) on said chamber to permit addition of a material to be dispersed to said chamber;

   first means (130) acting as a fluid deflector located in the fluid stream and serving as means for directing fluid away from said fluid stream into said chamber to permit the directed fluid to dissolve said material in said chamber into said fluid stream;

   second means (131) for directing the directed fluid containing the said material back into the fluid stream and comprising a fluid outlet tube located in said fluid stream in a direction opposite to the fluid direction; and

   control means for controllably restricting the amount of fluid flowing through said first and second means, characterised in that the control means includes a rotatable plug (101), with said first means for directing fluid away from said stream comprising an opening (119) in said rotatable plug and said second means comprising a second opening (121) in said rotatable plug, said rotatable plug being located at least partially in said fluid stream and including a plurality of first openings (140 to 142) to vary the flow of fluid into the chamber of said inline dispersal valve and a plurality of second openings (143 to 145) to vary the flow of fluid through said second opening through rotation of said rotatable plug.

2. An inline dispersal valve comprising an input pipe (111) coupled to receive a main fluid stream, an output pipe (112) coupled to emit said main fluid stream, a chamber (117) for containing solid dispersant material therein located intermediate said input and output pipes and having a top and having a bottom comprising an inlet port aperture (130) that has an axis positioned substantially normal to the flow direction of said main fluid stream and is formed through said bottom of said chamber at a position closer to said input pipe than said output pipe, an outlet port aperture (131) that has an axis positioned substantially normal to the flow direction of said main fluid stream and is formed through said bottom of said chamber at a position closer to said output pipe than said input pipe, first fluid directing means having an inlet inserted into said main fluid stream below said chamber which is constructed to direct a portion of said main fluid stream away from said main fluid stream and into a secondary stream that flows towards said outlet port aperture, second fluid directing means having an outlet inserted into said main fluid stream below said chamber which is constructed to direct said secondary stream from said chamber so said secondary stream merges back with said main stream with said secondary stream flowing in substantially the same direction as said main stream, characterised by the presence of control means which includes a rotatable plug (101) comprising first and second regulating means (140-142 and 143-145) respectively wherein said first regulating means is located between said input port aperture and said first directing means and said second regulating means is located between said output port aperture and said second directing means, whereby rotation of said plug controllably restricts the areas of said input port and output port apertures that are available for said secondary stream.

3. The valve of claim 1 or 2 which includes a canister (170) for holding the material to be dispersed into the fluid stream.

4. The valve of claim 3, wherein said canister has a keyed section (181) and which valve has a keyed section (180) to mate with said canister.

5. The valve of any one of the preceding claims which includes a pressure relief valve (185).

6. The valve of any preceding claim wherein said rotatable plug has a tapered cylindrical surface providing rotational engagement in an opening in the wall of the chamber of said inline dispersal valve.

7. The valve of any one of the preceding claims which includes an annular tapered sealing seat (168) and a rotatable cap (150) for forming sealing engagement with said annular tapered sealing seat.

8. The valve of any of the preceding claims, which includes a further pressure relief valve (206) in said closure.

**Revendications**

1. Appareil de dispersion en ligne destiné à doser la quantité de matière qui est dispersée dans un courant de fluide, comprenant :

une chambre (117) destinée à contenir la matière à disperser dans un courant de fluide ;

un bouchon (150) monté sur ladite chambre pour permettre d'y ajouter la matière qu'il s'agit de disperser ;

des premiers moyens (130) jouant le rôle d'un déflecteur de fluide, placés dans le courant de fluide et servant de moyens pour dévier, vers ladite chambre, du fluide pris sur ledit courant de fluide pour permettre au fluide ainsi dévié de dissoudre ladite matière contenue dans ladite chambre et de l'introduire dans ledit courant de fluide ;

des deuxièmes moyens (131), destinés à renvoyer dans le courant de fluide, le fluide ainsi dévié qui contient ladite matière, et comprenant un tube de sortie de fluide placé dans le courant de fluide en sens inverse de l'écoulement du fluide ; et

des moyens de commande servant à étrangler dans une mesure réglée la quantité de fluide qui traverse lesdits premiers et deuxièmes moyens,

caractérisé en ce que lesdits moyens de commande comprennent une clé tournante (101), lesdits premiers moyens servant à dévier le fluide pris sur ledit courant comprenant une lumière (119) ménagée dans ladite clé tournante et lesdits deuxièmes moyens comprenant une deuxième lumière (121) ménagée dans ladite clé tournante, celle-ci étant placée au moins partiellement dans ledit courant de fluide et comprenant une pluralité de premières lumières (140 à 142) servant à faire varier le débit de fluide pénétrant dans la chambre dudit appareil de dispersion en ligne, et une pluralité de deuxièmes lumières (143 à 145) servant à faire varier le débit de fluide passant à travers ladite deuxième lumière par un mouvement de rotation de ladite clé tournante.

2. Appareil de dispersion en ligne comprenant un tube d'entrée (111) raccordé pour recevoir un courant de fluide principal, un tube de sortie (112) raccordé pour l'évacuation dudit courant de fluide principal, une chambre (117) destinée à contenir intérieurement la matière solide à disperser, placée entre lesdits tubes d'entrée et de sortie, et possédant une paroi supérieure et un fond présentant un orifice d'entrée (130) dont l'axe est sensiblement perpendiculaire à la direction de l'écoulement du courant de fluide principal, ledit orifice d'entrée étant formé à travers ledit fond, dans une position plus rapprochée du tube d'entrée (111) que du tube de sortie (112), un orifice de sortie (131) dont l'axe est sensiblement perpendiculaire à la direction de l'écoulement du courant de fluide principal et est formé à travers ledit fond, dans une position plus rapprochée du tube de sortie (112) que du tube d'entrée (111), des premiers moyens de déviation du fluide ayant une entrée engagée dans le courant de fluide principal au-dessous de ladite chambre, qui est construite de manière à dévier du courant de fluide principal une partie de ce courant pour l'introduire dans un courant secondaire qui s'écoule vers l'orifice de sortie, des deuxièmes moyens de déviation du fluide ayant une sortie engagée dans le courant de fluide principal au-dessous de ladite chambre, qui est construite de manière à dévier le courant secondaire de ladite chambre de telle manière que le courant secondaire se réunisse de nouveau au courant principal, ledit courant secondaire s'écoulant sensiblement dans le même sens que ledit courant principal,

caractérisé par la présence de moyens de commande qui comprennent une clé tournante (101) comprenant des premiers et deuxièmes moyens de réglage (140-142 et 143-145) respectivement, lesdits premiers moyens de réglage étant placés entre ledit orifice d'entrée et lesdits premiers moyens de déviation, et lesdits deuxièmes moyens de réglage étant situés entre ledit orifice de sortie et lesdits deuxièmes moyens de déviation, de sorte que la rotation de ladite clé tournante étrangle dans une mesure réglée les aires de l'orifice d'entrée et de l'orifice de sortie qui sont disponibles pour donner passage audit deuxième courant secondaire.

3. Appareil selon l'une des revendications 1 ou 2, caractérisé en ce qu'il comprend une cartouche (170) servant à contenir la matière qu'il s'agit de disperser dans le courant de fluide.

4. Appareil selon la revendication 3, caractérisé en ce que ladite cartouche possède une section formant clavette (181), et en ce que l'appareil possède une section formant clavette (180) qui s'accouple à ladite cartouche.

5. Appareil selon l'une des revendications précédentes, caractérisé en ce qu'il comprend une soupape de décharge de pression (185).

6. Appareil selon l'une des revendications précédentes, caractérisé en ce que ladite clé tournante possède une surface cylindrique à section décroissante qui établit une liaison libre en rotation avec une ouverture de la paroi de la chambre dudit appareil de dispersion en ligne.

7. Appareil selon l'une des revendications précédentes, caractérisé en ce qu'il comprend un siège de fermeture étanche (168), de forme annulaire à section décroissante, et un bouchon tournant (150) capable d'établir un contact de joint étanche avec ledit siège de fermeture étanche annulaire à section décroissante.

8. Appareil selon l'une des revendications précédentes, caractérisé en ce qu'il comprend une autre soupape de décharge de pression (206) formée dans ledit bouchon.

**Patentansprüche**

1. Durchlauf-Dispergierventil zur Dosierung der Stoffmenge, die in einem Flüssigkeitsstrom aufgelöst wird, mit
    - einer Kammer (117) zur Aufnahme des im Flüssigkeitsstrom aufzulösenden Stoffes;
    - einem Verschluß (150) auf der Kammer, um die Zugabe des aufzulösenden Stoffes in die Kammer zu ermöglichen;
    - einer ersten Einrichtung (130), die als Flüssigkeitsdeflektor wirkt, im Flüssigkeitsstrom angeordnet ist und dazu dient Flüssigkeit aus dem Flüssigkeitsstrom in die Kammer abzuleiten, damit die abgeleitete Flüssigkeit den in der Kammer befindlichen Stoff in den Flüssigkeitsstrom auflöst;
    - einer zweiten Einrichtung (131) zur Rückführung der den aufgelösten Stoff aufweisenden abgeleiteten Flüssigkeit in den Flüssigkeitsstrom, wobei ein Flüssigkeitsausgangsrohr vorgesehen ist, das in dem Flüssigkeitsstrom in einer der Flüßrichtung entgegengesetzt weisenden Richtung angeordnet ist;
    - und einer Regelungseinrichtung, mit der die Flüssigkeitsmenge die durch die erste und zweite Einrichtung fließt gesteuert begrenzbar ist, dadurch gekennzeichnet,
    - daß die Regelungseinrichtung ein drehbares Ventilküken (101) aufweist, wobei die erste Einrichtung, die Flüssigkeit aus dem Flüssigkeitsstrom ableitet, eine erste Öffnung (119) und die zweite Einrichtung eine zweite Öffnung (121) in dem Ventilküken aufweisen;
    - und daß das drehbare Ventilküken mindestens teilweise in dem Flüssigkeitsstrom angeordnet ist und eine Vielzahl an ersten Durchbrüchen (140-142) besitzt, um den Flüssigkeitsfluß in der Kammer des Durchlauf-Dispergierventils zu variieren und eine Vielzahl an zweiten Durchbrüchen (143-145) besitzt, um den Flüssigkeitsfluß durch die zweite Öffnung zu variieren, wobei dies durch Drehung des Ventilkükens erfolgt.

2. Durchlauf-Dispergierventil, mit einer Anschlußeingangsröhre (111) zur Aufnahme eines Hauptflüssigkeitsstroms, einer Anschlußausgangsröhre (112) zur Abgabe des Hauptflüssigkeitsstroms, einer Kammer (117) zur Aufnahme eines dispergierenden Stoffes in festem Zustand, die zwischen der Eingangs- und Ausgangsröhre angeordnet ist und die ein Oberteil und ein Unterteil besitzt, wobei eine Eingangsdurchströmungsöffnung (130) vorgesehen ist, deren Achse im wesentlichen senkrecht zur Fließrichtung des Hauptflüssigkeitsstroms ausgerichtet ist und durch das Unterteil der Kammer hindurch an einer Stelle ausgebildet ist, die näher zur Eingangs- als zur Ausgangsröhre liegt, und eine Ausgangsdurchströmungsöffnung (131) vorgesehen ist, deren Achse im wesentlichen senkrecht zur Fließrichtung des Hauptflüssigkeitsstroms ausgerichtet ist, die näher zur Ausgangs- als zur Eingangsröhre liegt, ferner mit einer ersten Flüssigkeits-Führungseinrichtung, die einen in den Hauptflüssigkeitsstrom unterhalb der Kammer ragenden Einlaß aufweist und ausgebildet ist um einen Teil des Hauptflüssigkeitsstroms von diesem weg und in einen Sekundär-Strom zu führen, der in Richtung zur Ausgangsdurchströmungsöffnung fließt, einer zweiten Flüssigkeits-Führungseinrichtung, die einen in den Hauptflüssigkeitsstrom unterhalb der Kammer ragenden Einlaß aufweist und ausgebildet ist um den Sekundär-Strom aus der Kammer zu führen, so daß der Sekundär-Strom in den Hauptstrom zurückfließt, wobei der Sekundär-Strom im wesentlichen in die gleiche Richtung wie der Hauptstrom fließt, dadurch gekennzeichnet, daß eine Regelungseinrichtung vorgesehen ist, die ein drehbares Ventilküken (101) aufweist, welches ein erstes und zweites Regelungselement (140-142,143-145) besitzt, wobei das erste Regelungselement zwischen der Eingangsdurchströmungsöffnung und der ersten Führungseinrichtung angeordnet ist, so daß bei Drehung des Ventilkükens die für den Sekundär-Strom zur verfügung stehenden Flächen der Eingangs- und Ausgangs-Durchströmungsöffnungen gesteuert versperrbar sind.

3. Ventil nach einem der Ansprüche 1 oder 2, dadurch gekennzeichnet, daß ein Kanister (170) zur Aufnahme des im Flüssigkeitsstrom aufzulösenden Stoffes vorgesehen ist.

4. Ventil nach Anspruch 3, dadurch gekennzeichnet, daß der Kanister und das Ventil jeweils entsprechende, in Eingriff miteinander bringbare, Passungselemente (180,181) aufweisen.

5. Ventil nach einem der vorangehenden Ansprüche, dadurch gekennzeichnet, daß ein Druckminderungsventil (185) vorgesehen ist.

6. Ventil nach einem der vorangehenden Ansprüche, dadurch gekennzeichnet, daß das drehbare Ventilküken eine konische Umfangsfläche aufweist, die eine drehbare Lagerung in einer Öffnung der Wandung der Kammer des Dispergierventils ermöglicht.

7. Ventil nach einen der vorangehenden Ansprüche, dadurch gekennzeichnet, daß ein ringförmiger, konischer Dichtungssitz (168) und eine mit diesem in abgedichteten Eingriff bringbare, drehbare Kappe (150) vorgesehen sind.

8. Ventil nach einem der vorangehenden Ansprüche, dadurch gekennzeichnet, daß ein weiters Druckminderungsventil (206) in dem Verschluß vorgesehen ist.

# Fig. 1

Fig. 2

Fig. 3

## Fig. 4

Fig. 5

170A

170

178

175

179

180

183

172

171

173

182

Fig. 6

140

141

142

143

121

119

144

145

140

# Fig. 7

Fig. 8

Fig. 9